(19) Europäisches Patentamt
European Patent Office
Office européen des brevets

(11) Publication number: **0 025 799**
**B1**

(12) **EUROPEAN PATENT SPECIFICATION**

(45) Date of publication of patent specification: **30.11.83**

(51) Int. Cl.$^3$: **C 07 F 5/06**, B 01 J 29/06, C 01 B 33/28, C 01 B 33/32, C 01 G 17/00

(21) Application number: **80900750.3**

(22) Date of filing: **24.03.80**

(86) International application number: **PCT/US80/00356**

(87) International publication number: **WO 80/02026 02.10.80 Gazette 80/22**

# (54) A CYCLIC PROCESS FOR FORMING HIGH PURITY ZSM-5 CATALYST.

(30) Priority: **28.03.79 US 24559**
**26.10.79 US 88701**

(43) Date of publication of application:
**01.04.81 Bulletin 81/13**

(45) Publication of the grant of the patent:
**30.11.83 Bulletin 83/48**

(84) Designated Contracting States:
**FR**

(56) References cited:
**GB - A - 1 365 318**
**US - A - 3 228 969**
**US - A - 3 425 800**
**US - A - 3 516 786**
**US - A - 3 692 475**
**US - A - 3 702 886**
**US - A - 3 966 883**
**US - A - 4 041 135**
**US - P - 41 751 14**

(73) Proprietor: **W.R. GRACE & CO.**
**Grace Plaza 1114 Avenue of the Americas**
**New York New York 10036 (US)**

(72) Inventor: **McDANIEL, Carl Vance**
**10725 Crestview Drive**
**Laurel, MD 20810 (US)**
Inventor: **LUNDQUIST, Joseph Theodore, Jr.**
**5413 El Camino**
**Columbia, MD 20810 (US)**

(74) Representative: **von Kameke, Allard (DE)**
**Uexküll & Stolberg, Patentanwälte Beselerstrasse 4**
**D-2000 Hamburg 52 (DE)**



Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

# A cyclic process for forming high purity ZSM-5 catalyst

## Background of the invention

The present invention is directed to an improved method for preparing certain catalytic aluminosilicate zeolites of a high degree of crystallinity. The presently disclosed method uses certain material and conditions which yield an unexpected, improved and economically effective mode for preparing the desired zeolite catalyst material.

Zeolite materials, both natural and synthetic, have been demonstrated in the past to have catalytic capabilities for various types of hydrocarbon conversions. Certain zeolite materials are ordered, porous crystalline aluminosilicates having a definite crystalline structure within which there are a large number of small pores which are interconected by a number of still smaller channels. These pores and channels are precisely uniform in size. Since the dimensions of the pores are such as to accept molecules of certain dimensions for absorption while rejecting those of larger dimensions, these zeolite materials have come to be known as molecular sieves and are utilized in a variety of ways which take advantage of their properties.

Molecular sieves include a wide variety of positive ion-containing crystalline aluminosilicates which are both natural and synthetic. These materials can be described as rigid, three-dimensional networks of $SiO_4$ and $AlO_4$ in which the tetrahedra atoms are crosslinked by the shared oxygen atoms wherein the ratio of the total amount of aluminum and silicon atoms to oxygen atoms is 1:2. The electrovalence of the tetrahedra which contain aluminum is balanced by the inclusion in the crystalline structure of a cation, as for example, an alkali metal or an alkaline earth metal cation. In certain instances certain of the cations have been exchanged either entirely or partially by another type of cation utilizing standard ion exchange techniques. In this manner, it has been found possible to vary the effective size of the pores in a given aluminosilicate material by suitable selection of a particular cation.

In accordance with such prior art techniques, one has been able to form a great variety of synthetic crystalline aluminosilicate materials. Examples of these materials are disclosed in U.S. Patents 2,882,243; 2,882,244; 3,130,007; 3,247,155; 3,308,069 and 3,314,752; merely to name a few.

More recently, U.S. patent 3,702,886 has described a new synthetic aluminosilicate composition which can be identified by its characteristic x-ray diffraction pattern and can also be identified in terms of mole ratios of oxides according to the following general formula:

$$0.9 \pm 0.2\ M_{2/n}O: Al_2O_3:x\ SiO_2:z\ H_2O$$

in which M represents a cationic moiety described below, n is the valence of the cationic moiety, x is at least 5 and z is from 0 to about 40. These synthetic crystalline materials have been designated as zeolite ZSM-5 or simply ZSM-5 materials and are more fully described in U.S. patent 3,702,886, which teaching is incorporated herein by reference. This prior art teaches that in order to form the desired material one initially forms a mixture of water, a tetraalkyl ammonium hydroxide, sodium oxide, an oxide of aluminum or gallium, and an oxide of silicon or germanium in a certain molar ratio range and then to subject the mixture to superatmospheric pressure and elevated temperature of at least 100°C and preferably at least 150°C.

U.S. patent 4,091,007 discloses an improved method of forming the desired zeolite by providing at least 70 percent of the oxide of aluminum via an alumina containing clay.

Each of the above methods is directed to a single stage batch process done under high temperature and pressure conditions. The reaction mixture requires at least two cationic species with one of them being a quaternary alkyl ammonium compound. The prior art requirements with respect to starting materials and reaction conditions are difficult and costly to perform and, therefore, do not permit the formation of a highly crystalline material in a simple, cost effective manner.

U.S. patent 3,228,969 discloses making ZK-4 with a recycle stream. However, it requires the use of selective exchange to remove the sodium ions that build up in the recycle stream.

British Patent 1,365,318 discloses making crystalline aluminosilicate crystals by using an amine and a halide. The preferred operating conditions require elevated temperatures and pressures.

A method for preparing ZSM-5 type aluminosilicate zeolite of high crytallinity in an efficient and economically attractive mode is highly desired by the industry and would permit certain chemical reactions known to be enhanced by this type of catalyst material to be undergone in an economic manner.

## Summary of the invention

The present invention is directed to a cyclic, process for forming ZSM-5 type zeolite of high crystallinity and absorption characteristics. The process comprises initially forming a ZSM-5 type zeolite to produce a first mother liquor. Since the ZSM-5 type zeolite is made of a very large amount of silicon oxide, the original reaction mixture became depleted of silicon oxide as the zeolite formed. When the crystallization stops, it is because the concentration of silicon oxide is low. By adding more silicon oxide to the recycled mother liquor it has been found that

not only can you form additional ZSM-5 crystals, but this can now be done at a much faster rate without the need for any pressurized reactor conditions.

After the silicon oxide has been added to the mother liquor along with any additional reactants necessary to achieve the required reactant concentrations, the system is maintained at a temperature of from 70°C to the boiling point of the system and at atmospheric pressure for a time sufficient to permit crystallization. The desired solid crystalline product is removed and the mother liquor is recycled to be used again. The solid product recovered, as more fully described hereinbelow, is ZSM-5 zeolite of high crystallinity and of high hydrocarbon absorption characteristics. Further features of the process include using as the organic template either a tetrapropylammonium cation such as obtained from tetrapropylammonium hydroxide or tetrapropylammonium halide or to use the template produced by using a mixture of a trialkylamine and an alkyl halide. The initial reaction to produce ZSM-5 can also be facilitated by adding seed particles of already formed ZSM-5.

Description of the invention

The object of the present invention is to prepare ZSM-5 type crystalline aluminosilicate zeolites in a noval, efficient and economically feasible manner. The present invention is directed to a continuous, cyclic process which utilizes low temperatures and pressures and readily available, cost-effective starting components.

One of the preferred aspects of the present invention is the formation of an initial aqueous system from components which include a source of at least one inorganic cation in combination with a $C_2$—$C_5$ trialkyl amine and a $C_2$—$C_5$ alkyl halide and cyclically removing the solid product formed while adding additional silicon oxide or germanium oxide to the mother liquor. A further optional feature is the presence of a small amount of previously formed ZSM-5 zeolite in the aqueous system. However, the critical key feature of the process as now understood is the use of the recycled mother liquor. This permits the subsequent ZSM-5 zeolite formation under non-pressured atmospheric conditions, and this in turn permits lower reaction temperatures. The utilization of these unique process conditions unexpectedly permits the ready formation of highly crystalline, catalytically active ZSM-5 material at lower temperatures and at normal pressure which, in turn, permits the use of simple apparatus.

The trialkyl amine and the alkyl halide found useful in the present invention may have $C_2$—$C_5$ alkyl groups as, for example, ethyl, n-propyl, isopropyl, n-butyl, isobutyl, n-pentyl and the like which are the same or different within each of the compounds as well as with respect to each of the compounds. The $C_2$—$C_5$ alkyl amine can be, for example, triethylamine, diethylpropylamine, tripropylamine, ethyldipropylamine, tributylamine, or tripentylamine and the like. It is preferred that the alkylamine be selected from a $C_2$—$C_4$ alkylamine with tripropylamine being most preferred. Similarly, with respect to the $C_2$—$C_5$ alkyl halide, the alkyl group can be ethyl, propyl, n-butyl, isobutyl, n-pentyl, isopentyl and the like and the halide can be selected from fluorine, bromine, chlorine or iodine with bromine or chlorine being preferred. The preferred alkyl halide is a $C_2$—$C_3$ alkyl halide. The mole ratio of the trialkylamine to alkyl halide should be from about 0.5 to 2.0, with from about 0.7 to 2.0 being preferred.

Alternatively the organic template can be provided by the addition of a tetrapropylammonium compound such as tetrapropylammonium hydroxide or a tetrapropylammonium halide where the halide is advantageously the bromide.

The source of silica, alumina and an alkali metal cation are those materials conventionally used in forming the subject ZSM-5 type zeolite. Each of the materials is relatively inexpensive and, when used in combination with the presently described trialkyl amine and alkyl halide in accordance with the present invention, have been unexpectedly found to permit the formation of the desired product in an economically attractive manner. The source of silica in the reaction mixture may be clay alone or a combination of both a clay and a non-clay added source of silica. Typical non-clay added sources of silica that can be readily employed in the presently described process include commercially available aqueous dispersions of colloidal silica, water glass, sand, silica gel, fumed silica and finely divided precipitated silica as well as other commercial sources well known to those skilled in the art.

The source of alumina which may be used in the presently described process, include both a clay and a non-clay source of alumina such as, for example, an alkali metal, or alkaline earth metal aluminate, alumina, such as barite, water soluble aluminum salts as well as alumina containing clays such as kaolinite, illite, attapulgite, halloysite and the like. It is known that ZSM-5 type zeolites can be prepared by utilizing, as a component of the reaction mixture, a source of alumina which comprises at least about 70 percent by weight of an alumina-containing clay which has been previously calcined at elevated temperatures. It has been presently found that crystalline aluminosilicate zeolites of the ZSM-5 type can be readily produced in accordance with the presently taught process by utilizing a readily available alumina source such as sodium aluminate.

The alkali metal component of the reaction mixture can be selected from an alkali metal oxide or an alkali metal hydroxide or mixtures thereof such as sodium oxide, potassium oxide, lithium oxide, sodium hydroxide, potassium hydroxide, lithium hydroxide and the like.

The mixture of components can be suitably formed with an aqueous medium. Such a medium can be comprised of water or of water mixed with a minor amount of a $C_1$—$C_3$ alkyl alcohol such as methanol, ethanol, n-propanol or isopropanol. It is preferable that when an alcohol is used in combination with water, the alcohol be either methanol or ethanol and that the preferred amount of alcohol be not greater than 20 percent. A specific embodiment of the present process employs a reaction medium formed from a combination of a $C_1$—$C_3$ alkyl alcohol and water with the alcohol forming from 5 to 20 percent by volume of the reaction medium when the mixture of required components includes a trialkyl amine in which the combined alkyl groups have from 12 to 15 carbon atoms and or when the mixture includes a $C_4$—$C_5$ alkyl halide in which the halide is selected from the halides described hereinabove.

The term "aqueous system" is meant to define the entire system formed by the mixture of components and the aqueous medium. Such a system will normally comprise of liquid organic, liquid aqueous and solid phases when using the alkyl amine and the alkyl halide as the organic template. The phases will have a degree of solubility equilibrium among them with the organic phase predominantly comprising the alkyl amine and alkyl halide, the solid phase comprising the source of an oxide of silicon or germanium, the source of an oxide of aluminum or gallium, the source of the alkali metal cation and the optional ZSM-5 zeolite crystalline product.

The presently described process requires the initial formation in an aqueous system as described hereinabove of a mixture of components as also described hereinabove such that the mixture has a composition falling within the molar ratio range set forth hereinbelow.

| | |
|---|---|
| $M^++N'/W_2O_3$ | 10 —300 |
| $M^++N'/YO_2$ | 0.5— 5 |
| $M^+/M^++N'$ | 0.3— 0.85 |
| $YO_2/W_2O_3$ | 5 —100 |
| $RX/N'$ | 0 — 2.0 |
| $H_2O+R''OH/N'+M^+$ | 18 —180 |
| $R''OH/H_2O$ | 0 — 0.2 |

wherein N' is either $R'_4N^+$ where R' is propyl or $R_3N$ where R is a $C_2$—$C_5$ alkyl, R is a $C_2$—$C_5$ alkyl, R'' is a $C_1$—$C_3$ alkyl group $M^+$ is an alkali metal cation, $W_2O_3$ represents, as an oxide, the aluminum or gallium source as described above, and $YO_2$ represents, as an oxide, the silicon or germanium source as described above.

The aqueous system initially formed is then heated and maintained a temperature of from 70°C to the boiling point of the system for a period of time sufficient to cause crystallization within the mixture. Times found most suitable for this are from one hour to sixty days with from about 1 to 10 days being normally sufficient. The resultant solid product is separated from the reaction medium by conventional means such as by filtration or decantation and then washing the separated solid product with water.

The mother liquor recovered from the separation is then recycled and used as the medium for continued formation of the desired zeolite product. The recycled mother liquor is treated with additional amounts of a source of an oxide of silicon or germanium. The amount of added material should be from 3 to 6 weight percent of the oxide, and preferably from 4 to 6 weight percent, based on the weight of the mother liquor. It is believed the recycled liquor also contains a previously formed ZSM-5 zeolite in small amounts, which significantly assists in the formation of the next batch of ZSM-5. In addition to the inherent presence of the zeolite, further ZSM-5 also can be added by retaining a portion of the solid product formed in the prior cycle in the mother liquor during the separation step or by having the additional zeolite introduced into the mother liquor separately or with the source of silicon or germanium. The amount of ZSM-5 zeolite than can optionally be added is a small amount, such as from 1 to 30 percent by weight and, preferably, from 1 to 10 percent by weight based on the total weight of the oxide of silicon or germanium present in the recovered mother liquor after the additional make-up silicon or germanium oxide has been added. The incorporation of this optional amount of preformed ZSM-5 type aluminosilicate into the reaction mixture for the new cycle can be done as part of the introduction of any one of the components or can be separately added at any time prior to heating of the reaction mixture with respect to any one of the cyclic operations.

It has been found, with the exception of the solid product of the initial cycle which normally has a moderate degree of crystallinity, that the presently described process unexpectedly produces a solid product which is highly crystalline, has good hydrocarbon absorption characteristics and catalytic activity. The formed product can be substantially completely crystalline within relatively short periods of time. The properties of the presently formed product are substantially equivalent to that of the ZSM-5 zeolite formed by the more complex batch processes previously known, particularly the high temperature and pressure technique of U.S. patent 3,702,886.

The identity of the product and the degree of crystallinity were determined by standard x-ray diffraction techniques by comparing the interplanar spacing and the relative intensities of the product to a standard product formed in accordance with the teaching of U.S. Patent 3,702,886. The x-ray radiation was the K-alpha doublet of copper, and a scintillation counter

spectrometer with a strip chart pen recorder was used to make the analysis.

It is preferred that the resultant solid product from each cycle be at least partially dehydrated. This can be done by heating the resultant product to a temperature in the range of from about 200—600°C in an inert atmosphere, such as air, nitrogen and the like, either at atmospheric pressures or at subatmospheric pressures for a time of between one and forty-eight hours. The dehydration can also be performed in known manners at lower temperatures by placing the resultant highly crystalline ZSM-5 type aluminosilicate under a substantial vacuum until the desired degree of dehydration, as determined in known manners, has occurred.

The resultant ZSM-5 type aluminosilicate zeolite can be used either in its original form or in a modified form in manners and for purposes known to those skilled in the art as described in U.S. patent 3,702,886. For example, the resultant material can have some or all of its cationic components replaced by a wide variety of other cations according to conventional techniques well known to those skilled in the art. Typical replacing cations can include hydrogen, ammonium or metal cation or mixtures of the same. Typical exchange techniques include ion exchange techniques caused by contacting the initially formed zeolite material with a salt of the desired replacing cation or cations and subsequently washing and drying the resultant zeolite material.

The subject ZSM-5 type aluminosilicate materials are known to be useful in cracking and hydrocracking processes as well as other petroleum refining practices including isomerization of n-paraffins and naphthenes, polymerization of compounds containing an olefinic carbon to carbon linkage, reforming, alkylation, isomerization of polyalkyl substituted aromatics. Further ZSM-5 type aluminosilicates are also known to be useful in catalytic processes such as the cracking of hydrocarbons and the conversion of cracked oils to more desired materials which have lower molecular weights and boiling points.

The ZSM-5 type aluminosilicate materials prepared by the instant process can be incorporated with other substances in manners well known depending upon the desired end purpose. Such materials can include both active and inactive materials which are both naturally and synthetically occurring and include as, for example, other zeolites, clays, silica or metal oxides.

The following examples are given for illustrative purposes only and are not meant to be a limitation of the presently described invention except as defined by the claims appended hereto. All parts and percentages are by weight unless otherwise indicated.

Example I

ZSM-5 zeolite was formed by a cyclic process in which a mixture was initially formed in a glass vessel by dissolving 81.04 parts sodium hydroxide in 1252.1 parts water. To this was added 210.24 parts tripropylamine and 180.5 parts n-propylbromide. 19 parts of sodium aluminate (44% $Al_2O_3$; 30% $Na_2O$) dissolved in another 1252 parts of water were added to the system. Finally, 27 parts of dried, particulate ZSM-5 zeolite which was previously prepared and 477.9 parts of an aqueous solution of colloidal silica (30% $SiO_2$; sold under the tradename Ludox) was added. The glass vessel was fitted to retain volatiles of the system while allowing the system to remain at one atmosphere. The system was heated to 93°C for 6 days and then allowed to cool and filtered. 3026 parts of mother liquor, comprising about 195 parts organic and 2831 parts aqueous portions, were collected. The initial filter cake (125 parts) was dried and a sample was analyzed by x-ray diffraction as having 37 per cent crystallinity.

The x-ray diffraction was conducted by standard technique. The radiation source was the K-alpha doublet of copper and a scintillation counter spectrometer with a strip chart per recorder was used. The peak heights, I, and their positions as a function of two times the Bragg angle, theta, were read and relative peak heights determined. These results were compared to x-ray diffraction data obtained from a sample formed by the method of Example 23 of U.S. Patent 3,702,886.

The recovered mother liquor (195 parts organic phase: 2831 parts aqueous phase) was placed in a glass vessel fitted in the same manner as described above. 489.8 parts of Ludox and 28.2 parts of particulate ZSM-5 material were added to the liquor. The system was again heated and maintained at 93°C and atmospheric pressure for 6 days. The system was then cooled and filtered. 256 parts of recovered solids were washed with water and dried. X-ray analysis was done in the same manner as described above and the results, when compared to the standard product, indicated crystallinity of 100%.

The 3156 parts (about 177 parts organic phase: 2979 parts aqueous) filtrate/mother liquor recovered from the above cycle was again placed in a glass vessel to which was added 478 parts of Ludox and 27 parts of solid ZSM-5 material formed in the previous cycle. The system was again heated to and maintained at 93°C at atmospheric pressure for 6 days. The solid (254 parts) material recovered upon filtration, was washed, dried and x-ray analyzed and showed the product to be 100% crystalline.

The filtrate was used again in the manner described in the above paragraph to obtain additional quantities of ZSM-5 zeolite material of high crystallinity.

Example II

ZSM-5 zeolite of high crystallinity was formed by the cyclic process of the present invention by adding to a 5-gallon, 4-neck glass flask equipped with 2 reflux condensers, one thermometer and one thermal regulator the following material: 288 parts of sodium hydroxide dissolved in 4449.6 parts D.I. water; 747.1 parts tripropylamine; 641.5 parts n-propylbromide; 84 parts sodium aluminate (44% $Al_2O_3$ and 30% $Na_2O$) dissolved in 4449.6 parts D.I. water; 1698.2 parts of 30% colloidal silica (Ludox); and 96 parts of previously prepared, oven-dried, particulate ZSM-5 zeolite. All additions were done with stirring. The formed system was heated to reflux and maintained at that state for 6 days. Upon cooling the system was filtered and 945 parts of solid, washed material was collected. The filtrate (about 10,740 parts) was also recovered. A sample of the solid material was analyzed by X-ray diffraction in the manner described in Example I above and showed 17% crystallinity.

The filtrate collected above was placed into a flash equipped as described above. While stirring, 96 parts of oven dried, particulate ZSM-5 zeolite was added and then 1698 parts of Ludox solution. The resultant solution was heated to reflux and maintained at that state for six days. The solution was cooled and filtered. The recovered solid (1019 parts) was washed with water and dried. X-ray diffraction analysis showed the product to have 100% crystallinity.

The filtrate was again used with the addition of 1698 parts of Ludox and 96 parts ZSM-5 solid. The system was heated to reflux and maintained at that state for eight days. The solid recovered (840 parts) was washed, dried and x-ray analyzed as being about 100% crystallinity. The filtrate was suitable for additional runs.

Example III

ZSM-5 zeolite of high crystallinity was formed in the same manner as described in Example II above except that the system was maintained at 85 to 88°C. The solid product (823 parts) recovered from the first cycle was analyzed as having 17 percent crystallinity. 1698 parts of Ludox (30% $SiO_2$) and 96 parts of ZSM-5 solid were added to the 9258 parts of filtrate recovered from first cycle. The system was again heated and maintained at 85 to 88°C for 7 days, after which the solids (988 parts) were separated from the liquids. The solids were analyzed to be 100% crystalline. Again, to 3132 parts of the fluids recovered from the previous cycle were added 27 parts of previously formed crystalline ZSM-5 solid and 3017 parts Ludox. The mixture was again heated to 85 to 88°C for 7 days and the recovered solids were analyzed as 100% crystalline.

Example IV

ZSM-5 zeolite is formed in the same cyclic manner as described in Example II above, except that the tripropylamine is substituted with triethylamine. The solid recovered from the first cycle is discarded. The solids of the second and third cycles are highly crystalline ZSM-5 material similar to that obtained in Example II above.

Example V

ZSM-5 zeolite is formed in the same manner as described in Example II above except that the temperature at which the formed system is heated is 75°C. The product of the second and subsequent cycles and are high crystallinity similar to that obtained in Example II above.

Example VI

ZSM-5 zeolite was formed by a cyclic process without the addition of any zeolite seeds. A mixture was initially formed in a glass vessel by dissolving 720 parts sodium hydroxide in 11,124 parts of distilled water. This dissolved mixture was transferred to a 50 liter round bottom flask with three necks. To this flask was added a mixture of 1867.8 parts of tripropylamine and 1603.8 parts of n-propylbromide. 169.2 parts of sodium aluminate (44% $Al_2O_3$, 30% $Na_2O$) dissolved in another 11,124 parts of distilled water were added to the system while stirring. Finally 4245.5 parts of an aqueous solution of colloidal silica (30% $SiO_2$, sold under the tradename Ludox) was added while stirring for approximately 5 more minutes. The glass vessel was fitted with two condensers to retain volatiles of the system while allowing the system to remain at one atmosphere. The system was heated to above 88°C for slightly less than 8 days and then allowed to cool. The reaction material was filtered, and the filtrate was retained as the mother liquor. The initial filter cake was washed and the resulting 1350 parts were dried. A sample was analyzed by x-ray diffraction as having about 7.0% crystalline ZSM-5 by using the technique described in Example I.

The recovered mother liquor was then placed in a glass vessel fitted in the same manner as described above and heated until it reached reflux temperature. Then 4245.5 parts of Ludox were added to the liquor with stirring. The system was again heated and maintained at about above 88°C and at atmospheric pressure for 9 days. The system was then cooled and filtered, and the cake washed with water. The 1925 parts of recovered solids were dried. X-ray analysis was done in the same manner as described above, and the results, when compared to the standard product, indicated crystallinity of essentially 100%.

While the invention has been described in connection with certain preferred embodiments, it is not intended to limit the invention to the particular forms set forth, but, on the contrary, it is intended to cover such alternatives,

modifications and equivalents as defined by the appended claims.

**Claims**

1. A method for preparing a ZSM-5 type crystalline aluminosilicate zeolite material, characterized by an x-ray diffraction spectra having interplanar spacing lines at 11.1±0.2, (s.), 10.0±0.2 (s.), 7.4±0.15 (w.), 7.1±0.15 (w.), 6.3±0.1 (w.), 6.04±0.1 (w.), 5.97±0.1 (w.), 5.56±0.1 (w.), 5.01±0.1 (w.), 4.6±0.08 (w.), 4.25±0.08 (w.), 3.85±0.07 (v.s.), 3.71±0.05 (s.), 3.04±0.03 (w.), 2.99±0.02 (w.) and 2.94±0.02 (w.) comprising:

a) adding to a recovered mother liquor from a previous production of said ZSM-5 type zeolite sufficient make-up ingredients selected from the group consisting of

a water soluble alkali metal compound selected from an alkali metal oxide or alkali metal hydroxide,
an oxide of silicon or germanium,
an oxide of aluminum or gallium,
a tri($C_2$—$C_5$) alkyl amine,
a ($C_2$—$C_5$) alkyl halide,
a tetrapropylammonium compound,
water, and
mixtures thereof,

to form an aqueous mixture having a composition in terms of mole ratios within the following ranges:

| | |
|---|---|
| $M^+$+N'/$W_2O_3$ | 10 —300 |
| $M^+$+N'/$YO_2$ | 0.5— 5 |
| $M^+$/$M^+$+N' | 0.3— 0.85 |
| $YO_2$/$W_2O_3$ | 5 —100 |
| RX/N' | 0 — 2.0 |
| $H_2O$+R''OH/N'+$M^+$ | 18 —180 |
| R''OH/$H_2O$ | 0 — 0.2 |

wherein N' is either $R'_4N^+$ where R' is propyl or $R_3N$ wherein R is a $C_2$—$C_5$ alkyl, R is a $C_2$—$C_5$ alkyl, R'' is a $C_1$—$C_3$ alkyl, $M^+$ is an alkali metal cation, $W_2O_3$ represents aluminum oxide or gallium oxide, $YO_2$ represents silicon oxide or germanium oxide, and X is a halogen;

b) maintaining the system at a temperature from 70°C up to the boiling point of the system for a time sufficient to permit formation of solid crystallized product; and

c) separating the solid product from the mother liquor to recover the solid product as the desired crystalline aluminosilicate zeolite material and to recover the mother liquor for reuse in step a).

2. A method according to Claim 1 wherein the initial mother liquor is produced by

(i) forming an aqueous system by adding to an aqueous medium

a water soluble alkali metal compound selected from an alkali metal oxide or alkali metal hydroxide,
an oxide of silicon or germanium,
an oxide of aluminum or gallium,
a tri($C_2$—$C_5$) alkyl amine, and
a ($C_2$—$C_5$) alkyl halide

to form an aqueous reactant mixture, said mixture having a composition in terms of mole ratios within the following ranges:

| | |
|---|---|
| $M^+$+$R_3N$/$W_2O_3$ | 10 —300 |
| $M^+$+$R_3N$/$YO_2$ | 0.5— 5 |
| $M^+$/$M^+$+$R_3N$ | 0.3— 0.85 |
| $YO_2$/$W_2O_3$ | 5 —100 |
| RX/$R_3N$ | 0.5— 2.0 |
| $H_2O$+R''OH/$R_3N$+$M^+$ | 18 —180 |
| R''OH/$H_2O$ | 0 — 0.2 |

wherein R is a $C_2$—$C_5$ alkyl, R'' is a $C_1$—$C_3$ alkyl, $M^+$ is an alkali metal cation, $W_2O_3$ represents aluminum oxide or gallium oxide, $YO_2$ represents silicon oxide or germanium oxide, and X is a halogen;

(ii) adding to the aqueous system of step (i) previously formed solid zeolite having the same x-ray spectra as set forth above, in an amount of from 1 to 30 percent by weight based on the weight of the oxide of silicon or germanium,

(iii) maintaining the system from step (ii) at a temperature from 70°C up to the boiling point of the system for a time sufficient to permit formation of solid crystallized product; and

(iv) separating the solid product from the mother liquor and recovering the mother liquor for initial use in step (a);

3. A method according to Claim 1 wherein the material added to the recovered mother liquor in step (a) is an oxide of silicon or germanium.

4. A method according to Claim 2 wherein the material added to the recovered mother liquor in step (a) is an oxide of silicon or germanium.

5. A method according to Claim 1 further comprising adding to the mother liquor in step (a) previously formed solid zeolite particles having the same x-ray spectra as set forth above, in an amount of from 1 to 30 percent by weight based on the weight of the oxide of silicon or germanium present in the resulting mixture of step (a)

6. The process according to Claim 1 wherein the ingredients are sodium hydroxide, an oxide of silica, an oxide of aluminum, tri ($C_2$—$C_5$) alkyl amine and $C_2$—$C_5$ alkyl halide.

7. The process according to Claim 6 wherein the trialkyl amine is tripropylamine and the alkyl halide is a propyl halide.

8. The process according to Claim 6 wherein the ingredients are mixed at a temperature of from 70°C to the boiling point of the system for a time of from 1 hour to 60 days.

9. The process of Claim 5 wherein the amount of previously formed ZSM-5 aluminosilicate zeolite material is from 1 to 10 weight percent based on the weight of the oxide of

silicon or germanium present in the resulting aqueous mixture of step (a).

10. The process of Claim 1 or 6 wherein the aqueous medium is composed of from 80 to 95 percent by weight water and from 5 to 20 percent by weight of a $C_1$—$C_3$ alkyl alcohol.

11. The process of Claim 10 wherein the alkyl amine is a tri ($C_2$—$C_4$) alkyl amine and the alkyl halide is a $C_2$—$C_3$ alkylhalide.

**Patentansprüche**

1. Verfahren zur Herstellung eines kristallinen Aluminiumsilikatzeolithmaterials vom ZSM-5 Typ charakterisiert durch ein Röntgenbeugungsspektrum mit Netzebenenabstandslinien bei 11,1±0,2, (s.), 10.0±0,2 (s.), 7,4±0,15 (w.), 7,1±0,15 (w.), 6,3±0,1 (w.), 6,04±0,1 (w.), 5,97±0,1 (w.), 5,56±0,1 (w.), 5,01±0,1 (w.), 4,6±0,08 (w.), 4,25±0,08 (w.), 3,85±0,07 (v.s.), 3,71±0,05 (s.), 3,04±0,03 (w.), 2,99±0,02 (w.) und 2,94±0,02 (w.) dadurch gekennzeichnet, daß man:

a) einer rückgewonnenen Mutterlauge aus einer früheren Herstellung des Zeolith vom ZSM-5 Typ ausreichend Bestandteile ausgewählt aus der Gruppe bestehend aus

einer wasserlöslichen Alkalimetallverbindung ausgewählt
aus einem Alkalimetalloxid oder einem Alkalimetallhydroxid,
einem Oxid von Silicium oder Germanium,
einem Oxid von Aluminium oder Gallium,
einen Tri($C_2$—$C_5$)-alkylamin,
einem ($C_2$—$C_5$)-alkylhalogenid,
einer Tetrapropylammoniumverbindung,
Wasser und Mischungen derselben

zur Bildung einer wässrigen Mischung mit einer Zusammensetzung ausgedrückt in Molverhältnissen innerhalb der folgenden Bereiche:

| | |
|---|---|
| $M^+ + N'/W_2O_3$ | 10 —300 |
| $M^+ + N'/YO_2$ | 0,5— 5 |
| $M^+/M^+ + N'$ | 0,3— 0,85 |
| $YO_2/W_2O_3$ | 5 —100 |
| $RX/N'$ | 0 — 2,0 |
| $H_2O + R''OH/N' + M^+$ | 18 —180 |
| $R''OH/H_2O$ | 0 — 0,2 |

zusetzt, wobei N' entweder $R'_4N^+$, wobei R' eine Propylgruppe ist, oder $R_3N$ ist, worin R eine $C_2$—$C_5$-Alkylgruppe ist, R eine $C_2$—$C_5$-Alkylgruppe ist, R'', eine $C_1$—$C_3$-Alkylgruppe ist, $M^+$ ein Alkalimetallkation ist, $W_2O_3$ Aluminium- oder Gallium-oxid bedeutet und $YO_2$ Silicium- oder Germaniumoxid bedeutet und X ein Halogen ist,

b) das System zur Bildung von festem kristallisierten Produkt ausreichend lange auf einer Temperatur von 70°C bis hinauf zum Siedepunkt des Systems hält und

c) zur Gewinnung des festen Produkts als dem gewünschten kristallinen Aluminiumsilikatmaterial und zur Gewinnung der Mutterlauge zur Wiederverwendung in Stufe a) das feste Produkt von der Mutterlauge abtrennt.

2. Verfahren nach Anspruch 1, dadurch gekennzeichnet, daß man die anfängliche Mutterlauge herstellt, indem man

(i) ein wässriges System herstellt, indem man zu einem wässrigen Medium eine wasserlösliche Alkalimetallverbindung ausgewählt aus einem Alkalimetalloxid oder einem Alkalimetallhydroxid, ein Oxid von Silicium oder Germanium, ein Oxid von Aluminium oder Gallium, ein Tri($C_2$—$C_5$)-Alkylamin und ein ($C_2$—$C_5$)-Alkylhalogenid unter Bildung einer wässrigen Reaktantenmischung gibt, wobei diese Mischung hinsichtplich der Molverhältnisse eine Zusammensetzung in den folgenden Bereichen aufweist:

| | |
|---|---|
| $M^+ + R_3N/W_2O_3$ | 10 —300 |
| $M^+ + R_3N/YO_2$ | 0,5— 5 |
| $M^+/M^+ + R_3N$ | 0,3— 0,85 |
| $YO_2/W_2O_3$ | 5 —100 |
| $RX/R_3N$ | 0,5— 2,0 |
| $H_2O + R''OH/R_3N + M^+$ | 18 —180 |
| $R''OH/H_2O$ | 0 — 0,2 |

wobei R eine $C_2$—$C_5$-Alkylgruppe ist, R'' eine $C_1$—$C_3$-Alkylgruppe ist, $M^+$ ein Alkalimetallkation ist, $W_2O_3$ Aluminiumoxid oder Galliumoxid bedeutet, $YO_2$ Silicium- oder Germaniumoxide bedeutet und X ein Halogen ist,

(ii) zu dem wässrigen System aus Stufe (i) zuvor geformten festen Zeolith mit dem gleichen Röntgenspektrum wie oben angegeben in einer Menge von 1 bis 30 Gew.%, bezogen auf das Gewicht des Oxids von Silicium oder Germanium, gibt,

(iii) das System aus Stufe (ii) für die Bildung von festem kristallisierten Produkt ausreichend lange auf einer Temperatur von 70°C bis hinauf zum Siedepunkt des Systems hält und

(iv) das feste Produkt von der Mutterlauge abtrennt und die Mutterlauge für den Einsatz in Stufe (a) gewinnt.

3. Verfahren nach Anspruch 1, dadurch gekennzeichnet, daß man als Material, das der gewonnenen Mutterlauge in Stufe (a) zugesetzt wird, ein Oxid von Silicium oder Germanium verwendet.

4. Verfahren nach Anspruch 2, dadurch gekennzeichnet, daß man als Material, das der gewon Mutterlauge in Stufe (a) zugesetz wird, ein Oxid von Silicium oder Germanium verwendet.

5. Verfahren nach Anspruch 1, dadurch gekennzeichnet, daß man zu der Mutterlauge in Stufe (a) zuvor hergestellte Zeolithteilchen mit dem gleichen Röntgenspektrum wie oben angegeben in einer Menge von 1 bis 30 Gew.% bezogen auf das Gewicht des Oxids von Silicium oder Germanium, das in der resultierenden wässrigen Mischung von Stufe (a) vorhanden ist, gibt.

6. Verfahren nach Anspruch 1, dadurch

gekennzeichnet, daß man als Bestandteile Natriumhydroxid, ein Oxid von Silicium, ein Oxid von Aluminium, Tri($C_2$—$C_5$)Alkylamin und $C_2$—$C_5$-Alkylhalogenid verwendet.

7. Verfahren nach Anspruch 6, dadurch gekennzeichnet, daß man als Trialkylamin Tripolylamin und als Alkylhalogenid ein Propylhalogenid verwendet.

8. Verfahren nach Anspruch 6, dadurch gekennzeichnet, daß man die Bestandteile über einen Zeitraum von etwa 1 Std. bis 60 Tagen bei einer Temperatur von 70°C bis zum Siedepunkt des Systems mischt.

9. Verfahren nach Anspruch 5, dadurch gekennzeichnet, daß man zuvor gebildetes ZSM-5 Aluminiumsilikatzeolithmaterial bezogen auf das Gewicht des Oxids von Silicium oder Gemanium, das in der resultierenden wässrigen Mischung der Stufe (a) vorhanden ist, in einer Menge von 1 bis 10 Gew.% zusetzt.

10. Verfahren nach Anspruch 1 oder 6, dadurch gekennzeichnet, daß man ein wässriges Medium verwendet, das aus 80 bis 95 Gew.% Wasser und 5 bis 20 Gew.% eines $C_1$—$C_3$-Alkylalkohols zusammengesetzt ist.

11. Verfahren nach Anspruch 10, dadurch gekennzeichnet, daß man als Alkylamin ein Tri($C_2$—$C_4$)-Alkylamin und als Alkylhalogenid ein $C_2$—$C_3$-Alkylhalogenid verwendet.

## Revendications

1. Procédé de préparation d'un matériau de zéolite cristalline d'aluminosilicate du type ZSM-5, caractérisé par un spectre de diffraction des rayons X ayant des lignes d'espacement interplanaire à 11,1±0,2, (s.), 10±0,2 (s.), 7,4±0,15 (w.), 7,1±0,15 (w.), 6,3±0,1 (w.), 6,04±0,1 (w.), 5,97±0,1 (w.), 5,56±0,1 (w.), 5,01±0,1 (w.), 4,6±0,08 (w.), 4,25±0,08 (w.), 3,85±0,07 (v.s.), 3,71±0,05 (s.), 3,04±0,03 (w.), 2,99±0,02 (w.) et 2,94±0,02 (w.), consistant à:

a) ajouter, à une liqueur mère récupérée d'une production précédente de ladite zéolite du type ZSM-5, suffisamment d'ingrédients d'appoint choisis dans le groupe consistant en

un composé d'un métal alcalin soluble dans l'eau
choisi parmi un oxyde d'un métal alcalin ou un hydroxyde d'un métal alcalin,
un oxyde de silicium ou de germanium,
un oxyde d'aluminium ou de gallium,
une tri($C_2$—$C_5$ alkyl amine,
un halogénure d'alcoyle ($C_2$—$C_5$),
un composé de tétrapropylammonium,
de l'eau et
leurs mélanges,

pour former un mélange aqueux ayant une composition en termes des rapports molaires, dans les plages qui suivent:

| | |
|---|---|
| $M^+ + N'/W_2O_3$ | 10 —300 |
| $M^+ + N'/YO_2$ | 0,5— 5 |
| $M^+/M^+ + N'$ | 0,3— 0,85 |
| $YO_2/W_2O_3$ | 5 —100 |
| $RX/N'$ | 0 — 2,0 |
| $H_2O + R''OH/N' + M^+$ | 18 —180 |
| $R''OH/H_2O$ | 0 — 0,2 |

où N' est soit $R_4'N^+$ si R' est propyle ou $R_3N$ si R est un alcoyle $C_2$—$C_5$, R est un alcoyle $C_2$—$C_5$, R'' est un alcoyle $C_1$—$C_3$, $M^+$ est un cation d'un métal alcalin, $W_2O_3$ représente de l'oxyde d'aluminium ou de l'oxyde de gallium, $YO_2$ représente de l'oxyde de silicium ou de l'oxyde de germanium, et X est un halogène;

b) maintenir le système à une température de 70°C jusqu'au point d'ébullition du système pendant un temps suffisant pour permettre la formation du produit solide cristallisé; et

c) séparer le produit solide de la liqueur mère pour récupérer le produit solide sous forme du matériau souhaité de zéolite cristalline d'aluminosilicate et pour récupérer la liqueur mère pour une réutilisation à l'étape a).

2. Procédé selon la revendication 1, caractérisé en ce que la liqueur mère initiale est produite en

(i) formant un système aqueux en ajoutant á un milieu aqueux

un composé d'un métal alcalin soluble dans l'eau choisi parmi un oxyde d'un métal alcalin ou un hydroxyde d'un métal alcalin,
un oxyde de silicium ou de germanium,
un oxyde d'aluminium ou de gallium,
une tri($C_2$—$C_5$)alkyl amine et
un halogénure d'alcoyle ($C_2$—$C_5$)

pour former un mélange réactif aqueous, ledit mélange ayant une composition en termes des rapports molaires, dans les plages qui suivent:

| | |
|---|---|
| $M^+ + R_3N/W_2O_3$ | 10 —300 |
| $M^+ + R_3N/YO_2$ | 0,5— 5 |
| $M^+/M^+ + R_3N$ | 0,3— 0,85 |
| $YO_2/W_2O_3$ | 5 —100 |
| $RX/R_3N$ | 0,5— 2,0 |
| $H_2O + R''OH/R_3N + M^+$ | 18 —180 |
| $R''OH/H_2O$ | 0 — 0,2 |

où R est un alcoyle $C_2$—$C_5$, R'' est un alcoyle $C_1$—$C_3$, $M^+$ est un cation d'un métal alcalin, $W_2O_3$ représente de l'oxyde d'aluminium ou de l'oxyde de gallium, $YO_2$ représente de l'oxyde de silicium ou de l'oxyde de germanium et X est un halogène;

(ii) ajoutant, au système aqueux de l'étape (i), de la zéolite solide précédemment formée ayant les mêmes spectres de rayons X qu'indiqués ci-dessus, en une quantité de 1 à 30% en poids en se basant sur le poids de l'oxyde de silicium ou de germanium,

(iii) maintenant le système de l'étape (ii) à une température de 70°C jusqu'au point d'ébullition du système pendant un temps suffisant pour permettre la formation d'un produit cristallisé solide; et

(iv) séparant le produit solide de la liqueur mère et récupérant la liqueur mère pour un usage initial à l'étape (a).

3. Procédé selon la revendication 1, où le matériau ajouté à la liqueur mère récupérée à l'étape (a) est un oxyde de silicium ou de germanium.

4. Procédé selon la revendication 2, où le matériau ajouté à la liqueur mère récupérée à l'étape (a) est un oxyde de silicium ou de germanium.

5. Procédé selon la revendication 1, consistant de plus à ajouter, à la liqueur mère à l'étape (a), des particules de zéolite solide précédemment formée ayant les mêmes spectres de rayons X qu'indiqués ci-dessus, en une quantité de 1 à 30% en poids en se basant sur la poids de l'oxyde de silicium ou de germanium présent dans le mélange résultant de l'étape (a).

6. Procédé selon la revendication 1, où les ingrédients sont de l'hydroxyde de sodium, un oxyde de silice, un oxyde d'aluminium, de la tri($C_2$—$C_5$) alkyl amine et un halogénure d'alcoyle ($C_2$—$C_5$.

7. Procédé selon la revendication 6, où la trialkyl amine est de la tripropylamine et l'halogénure d'alcoyle est un halogénure de propyle.

8. Procédé selon la revendication 6, où les ingrédients sont mélangés à une température de 70°C au point d'ébullition du système pendant un temps de 1 heure à 60 jours.

9. Procédé selon la revendication 5, où la quantité du matériau de zéolite d'aluminosilicate ZSM-5 précédemment formée est de 1 à 10% en poids en se basant sur le poids de l'oxyde de silicium ou de germanium présent dans le mélange aqueux résultant de l'étape (a).

10. Procédé selon l'une des revendications 1 ou 6, où le milieu aqueous est composé de 80 à 95% en poids d'eau et de 5 à 20% en poids d'un alcool d'alcoyle $C_1$—$C_3$.

11. Procédé selon la revendication 10, où l'alkyl amine est de la tri ($C_2$—$C_4$) alkyl amine et l'halogénure d'alcoyle est un halogènure d'alcoyle ($C_2$—$C_3$).